# EUROPÄISCHE PATENTSCHRIFT

(11) **EP 1 536 978 B1**
(45) Veröffentlichungstag und Bekanntmachung des Hinweises auf die Patenterteilung: **20.06.2007**
(21) Anmeldenummer: 03794771.0
(22) Anmeldetag: 17.07.2003
(51) Int. Cl.: B60Q 1/48

(54) **VORRICHTUNG ZUR UMFELDERFASSUNG EINES FAHRZEUGS**
VEHICLE ENVIRONMENT DETECTION DEVICE
DISPOSITIF DE SURVEILLANCE DU CHAMP PERIPHERIQUE D'UN VEHICULE

(30) Priorität: 06.09.2002 DE 10241464
(43) Veröffentlichungstag der Anmeldung: 08.06.2005
(73) Patentinhaber: ROBERT BOSCH GMBH, 70442 Stuttgart (DE)
(72) Erfinder: UHLER, Werner, 76646 Bruchsal (DE)
(86) Internationale Anmeldenummer: PCT/DE2003/002405
(87) Internationale Veröffentlichungsnummer: WO 2004/024498

(56) Entgegenhaltungen:
- EP-A- 1 065 642
- WO-A-01/25054
- DE-A- 10 037 130
- US-A1- 2002 011 928

## Beschreibung

### Stand der Technik

Die Erfindung geht aus von einer Vorrichtung zur Umfelderfassung nach der Gattung des Hauptanspruchs. Es sind schon Einparkhilfesysteme bekannt, die mittels Ultraschallsensoren den Abstand zu Hindernissen in der Nähe des Fahrzeugs messen und den Fahrer akustisch oder mittels einer Balkenanzeige vor einer Annäherung an das Hindernis warnen. Hierbei muss der Fahrer die ihm gegebenen Warnanzeigen umsetzen, wobei dagegen ein direkter Blickkontakt zum gesamten rückwärtigen Fahrraum nicht besteht. Ferner sind auch Einparkhilfesysteme bekannt, bei denen eine Rückfahrkamera den rückwärtigen Fahrraum beobachtet und dem Fahrer das von der Kamera aufgenommene Bild des Fahrraums hinter dem Fahrzeug auf einem Bildschirm darstellt. Um jedoch den gesamten Rückraum des Fahrraums darstellen zu können, muss eine Kamera mit einer sehr starken Weitwinkeloptik verwendet werden, um die gesamte Breite eines Stoßfängers des Fahrzeugs und insbesondere den Nahbereich in der Umgebung des Fahrzeugs zu überwachen. Hieraus resultiert eine starke Verzerrung des Bildes, so dass das angezeigte Bild entweder für den Fahrer nur schwer interpretierbar ist oder vor der Anzeige einer aufwendigen Entzerrung unterzogen werden muss.

Die WO 01/25054 A1 zeigt eine Einrichtung zur Überwachung der Umgebung eines einparkenden Fahrzeugs, bei der eine Videokamera den rückwärtigen Bereich des Fahrzeugs überwacht. Zusätzlich sind Objekterkennungssensoren vorgesehen, die beispielsweise als Ultraschall-, Radar-, Video- oder Lidarsensoren ausgeführt. Sie messen den Abstand zu gefährlichen Objekten in der Fahrzeugumgebung. In einer ersten Ausführungsform werden die Bilddaten mit denjenigen Daten überlagert, die von den Objekterkennungssensoren geliefert werden. In einer weiteren Ausführungsform kann auch ein Hinweis darauf gegeben werden, wenn sich Hindernisse in einem Randbereich außerhalb des Kamerabildes befinden. Würde dies der Fall sein, können farbige Balken zur optischen Meldung von Objekten die im Fahrzeugumfeld angezeigt werden, das nicht vom Blickbereich der Kamera erfasst wird.

### Vorteile der Erfindung

Die erfindungsgemäße Vorrichtung zur Umfeldüberwachung mit den Merkmalen des Hauptanspruchs hat demgegenüber den Vorteil, dass auch Hinweise auf von der Sensorvorrichtung erfasste Hindernisse in das Kamerabild eingeblendet werden. Hierdurch können die eingeblendeten Hinweise von dem Fahrer in unmittelbaren Bezug zu dem von der Videokamera erfassten Bild gebracht werden. Indem die von der Sensorvorrichtung detektierten Objekte in einer Anzeige gemeinsam mit dem Bild der Kamera einblendet werden, erhält der Fahrer einen zusammenhängenden und einheitlichen Eindruck von der Situation in seinem Fahrzeugumfeld. Dies gestattet ihm eine einfache und anschauliche Interpretation der Manövrierbarkeit des Fahrzeugs insbesondere bei einem Zurücksetzen oder einem rückwärtigen Einparkvorgang, wobei die Sensorvorrichtung und die Kamera den rückwärtigen Fahrraum des Fahrzeugs überwachen. Ferner wird erreicht, dass die Kamera den Stoßfänger des eigenen Fahrzeugs nicht erfassen muss. Dadurch ist für die Überwachung des Fahrzeugumfelds mit der Kamera keine extreme Weitwinkeloptik erforderlich, so dass eine gute Interpretierbarkeit des Bildes auch ohne eine aufwendige Entzerrung möglich ist. Durch die Sensorvorrichtung ist dabei insbesondere ein Bereich unmittelbar an dem Stoßfänger detailliert erfassbar.

Es wird außerden vorgesehen, den Anzeigebereich der Anzeigeeinheit derart aufzuteilen, dass die von der Sensorvorrichtung erfassten, außerhalb des Kamerablickfeldes liegenden Hindernisse in einem Randbereich des Kamerabildes möglichst maßstabsgerecht dargestellt werden. So wird eine für den Benutzer besonders übersichtliche, möglichst realistische Darstellung des überwachten Fahrraums erreicht.

Weiterhin ist vorgesehen, auch den Stoßfänger des Fahrzeugs in der Anzeige darzustellen, um dem Fahrer die Orientierung zu erleichtern und insbesondere den Abstand zwischen Hindernis und Stoßfänger möglichst leicht erfassbar darzustellen.

Durch die in den Unteransprüchen aufgeführten Maßnahmen sind vorteilhafte Weiterbildungen und Verbesserungen der im Hauptanspruch angegebenen Vorrichtung zur Umfeldüberwachung möglich.

Besonders vorteilhaft ist, dem Fahrer eine Information über die Größe des Abstands anzuzeigen, so dass er seine Fahrgeschwindigkeit entsprechend dem Abstand zu dem Hindernis anpassen kann. Es ist ferner vorteilhaft, dem Fahrer Informationen über die Ausdehnung des Hindernisses zu geben, so dass er das Hindernis gegebenenfalls umfahren kann.

Indem die Kamera zur Überwachung des Fernbereichs und die Sensorik zur Überwachung des Nahbereichs verwendet wird, wird ermöglicht, dass der mit der Kameravorrichtung gerade schwer zu überwachende Nahbereich dennoch optimal überwacht und der Fahrer über die erfindungsgemäße Anzeige bestens informiert wird. Insbesondere Ultraschall- oder Mikrowellensensoren ermöglichen dabei eine möglichst genaue Abstandsmessung.

Ferner ist vorteilhaft, dem Fahrer über Hilfslinien oder Abstandsmarkierungen, die insbesondere auch in das Kamerabild eingeblendet werden, die Steuerung des Fahrzeugs und die Abschätzung von bildlich dargestellten Hindernissen zu erleichtern.

Die Verwendung einer Weitwinkelkamera ermöglicht dabei eine möglichst weitreichende Überwachung des Fahrraums, wobei die Brennweite der Weitwinkelkamera nicht so klein gewählt werden soll, dass das Bild extrem unnatürlich verzerrt wird.

### Zeichnung

Ausführungsbeispiele der Erfindung sind in der Zeichnung dargestellt und in der nachfolgenden Beschreibung näher erläutert. Es zeigen
Figur 1 eine Seitenansicht eines Kraftfahrzeugs mit einer erfindungsgemäßen Vorrichtung zur Umfeldüberwachung,
Figur 2 einen schematischen Aufbau einer erfindungsgemäßen Vorrichtung zur Umfeldüberwachung in einem Kraftfahrzeug,
Figur 3 Beispiele für Anordnungen einer Anzeigeeinheit einer erfindungsgemäßen Vorrichtung zur Umfeldüberwachung in einem Kraftfahrzeug,
Figur 4 ein Ausführungsbeispiel einer Anzeigendarstellung einer erfindungsgemäßen Vorrichtung zur Umfeldüberwachung eines Fahrzeugs.
Figuren 5a und 5b zeigen weitere Beispiele für eine Anzeigendarstellung einer nicht erfindungsgemäßen Vorrichtung zur Umfeldüberwachung eines Fahrzeugs.

### Beschreibung des Ausführungsbeispiels

Die erfindungsgemäße Vorrichtung zur Umfeldüberwachung kann für beliebige Fahrzeuge verwendet werden, die von einem Fahrer gesteuert werden. Insbesondere ist die Verwendung bei Fahrzeugen vorteilhaft, bei denen Teile des Fahrzeugumfeldes von dem Fahrer nicht durch direkte Beobachtung erfassbar sind bzw. bei denen das vollständige Fahrzeugumfeld auch durch das Anbringen einer Kameravorrichtung zur Erfassung von Licht im sichtbaren Bereich nicht oder nur mit großem Aufwand wahrnehmbar ist. Dies kann, wie bei einem Kraftfahrzeug, z.B. der Bereich unmittelbar in der Nähe des Fahrzeugs selbst sein, der mit einer Kamera nur mit großem optischen Aufwand erfasst werden kann, insbesondere dann, wenn die Kamera auch dazu dient die weitere Fahrzeugumgebung zu überwachen. Ähnliche Probleme ergeben sich auch bei Vorrichtungen zur Umfeldüberwachungen, z.B. bei Fahrzeugen, Flugzeugen oder Schiffen, bei denen eine entsprechende Sensorik auf einen Bereich gerichtet ist, der der direkten optischen Beobachtung oder einer Kameraerfassung im sichtbaren Bereich aufgrund einer zu großen Entfernungen nicht mehr zugänglich ist. Hierbei schließt sich dann ein Anzeigenbereich für die Hinweise auf die von der Sensorik erfassten Hindernisse im Fernbereich an das von der Kamera erfasste Bild an. Es ist dabei ist ein Überlappen des Kamerabildes mit einem Anzeigebereich möglich, in dem Hinweise auf Hindernisse gegeben werde, die von der Sensorvorrichtung erfasst werden. Damit können auch zusätzliche Hinweise zu Hindernissen in dem Kamerabild gegeben werden

Im Folgenden wird die Vorrichtung zur Umfeldüberwachung anhand einer in einem Kraftfahrzeug angeordneten, erfindungsgemäßen Vorrichtung zur Umfeldüberwachung erläutert. Hierbei schließt sich an einen, von dem Fahrzeug weiter entfernten, von der Kamera beobachteten Bereich ein Nahbereich mit geringerem Abstand zum Fahrzeug an, der nur von der Sensorik überwacht wird. Jedoch ist es auch entsprechend möglich, anstelle des Nahbereichs einen Fernbereich außerhalb des für die Kamera sichtbaren Bereichs durch eine Sensorik, z.B. durch Infrarot- oder Radarsensoren, zu überwachen und das hierbei gemessene Ergebnis ebenfalls in die Anzeigeneinheit einzublenden.

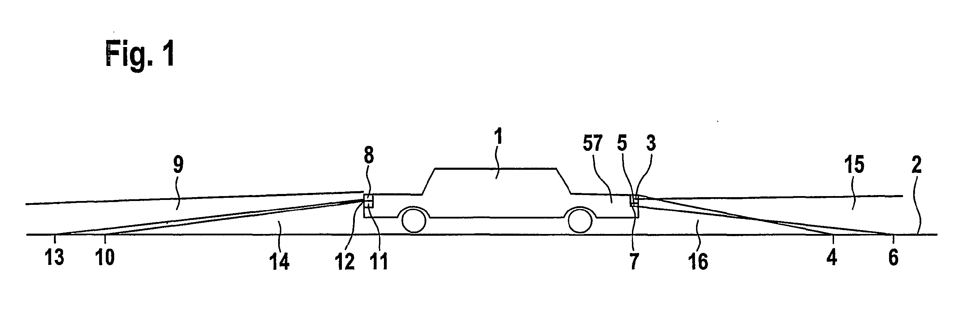

In der Figur 1 ist ein Kraftfahrzeug 1 dargestellt, das sich auf einem Fahrweg 2 bewegt oder ruhend auf dem Fahrweg 2 abgestellt ist. Das Kraftfahrzeug 1 weist eine Kamera 3 auf, die einen rückwärtigen Fahrraum des Kraftfahrzeugs beobachtet. Die Kamera 3 ist derart auf den Fahrweg 2 gerichtet, dass Bereiche des Fahrwegs, die nicht einen Mindestabstand 4 zu dem Kraftfahrzeug aufweisen, können von der Kamera 3 nicht beobachtet werden. Der Mindestabstand 4 ist an dem Fahrweg 2 aufgetragen. Im übrigen ist die Kamera 3 in das Unendliche gerichtet, so dass das darzustellende Bild von der maximalen Sichtweite, der Kameraauflösung und den lokalen Sichtmöglichkeiten ausgehend von der Position der Kamera 3 abhängt. Die Kamera 3 hat damit ein Blickfeld 15, das einen Teil des hinter dem Kraftfahrzeug 1 liegenden Fahrwegs 2 abdeckt. Die Kamera 3 ist vorzugsweise an einem Heck 57 des Fahrzeugs angeordnet, um den vom Fahrer nicht einsehbaren Bereich möglichst gut zu erfassen. In einer weiteren Ausführungsform kann die Kamera z.B. auch an dem Fahrzeugdach oder an einer Heckscheibe angeordnet sein. Ergänzend zu der Kamera 3 weist das Kraftfahrzeug 1 eine Sensorvorrichtung 5 auf, deren Sensoren ebenfalls auf den Fahrweg 2 gerichtet sind. Die Sensorvorrichtung 5 überwacht damit einen zweiten, fahrzeugnahen Bereich 16 des Fahrwegs 2, wobei das Kamerablickfeld 15 dagegen einen Fernbereich überdeckt. Die Sensorvorrichtung 5 weist dabei eine maximale Reichweite 6 auf, die bevorzugt größer als der Mindestabstand 4 für die Kamera 3 gewählt ist. Der Mindestabstand 7 liegt möglichst nahe am Fahrzeug und ist z.B. von der Anzahl der verwendeten Sensoren und gegebenenfalls von ihrem Messöffnungswinkel abhängig und beträgt z.B. ca. 5-10 cm zu dem Fahrzeug. Ein Anbringen einer Kameravorrichtung ist nicht auf die Fahrzeugrückseite beschränkt, sondern es kann auch an der Motorhaube eine weitere Kameravorrichtung 8 angeordnet sein, deren Blickfeld 9 mit einem Mindestabstand 10 den Fahrweg 2 erreicht. Eine weitere Sensorvorrichtung 11 kann einen Bereich vor dem Fahrzeug zwischen dem Mindestabstand 12 und der Reichweite 13 der weiteren Sensorvorrichtung 11 abdecken. Auch hier ist die Reichweite 13 geringfügig größer als der Mindestabstand 10 des von der Kameravorrichtung 8 überwachbaren Bereiches 14 gewählt. Die Kamera 3 ist vorzugsweise als eine Kamera mit einer Empfindlichkeit im sichtbaren Wellenlängenbereich ausgeführt. Ferner kann auch eine für andere Wellenlängenbereiche empfindliche Kamera verwendet werde, z.B. eine Infrarot-Kamera, so dass der Fahrweg 2 auch bei schwacher oder fehlender Beleuchtung beobachtet werden kann.

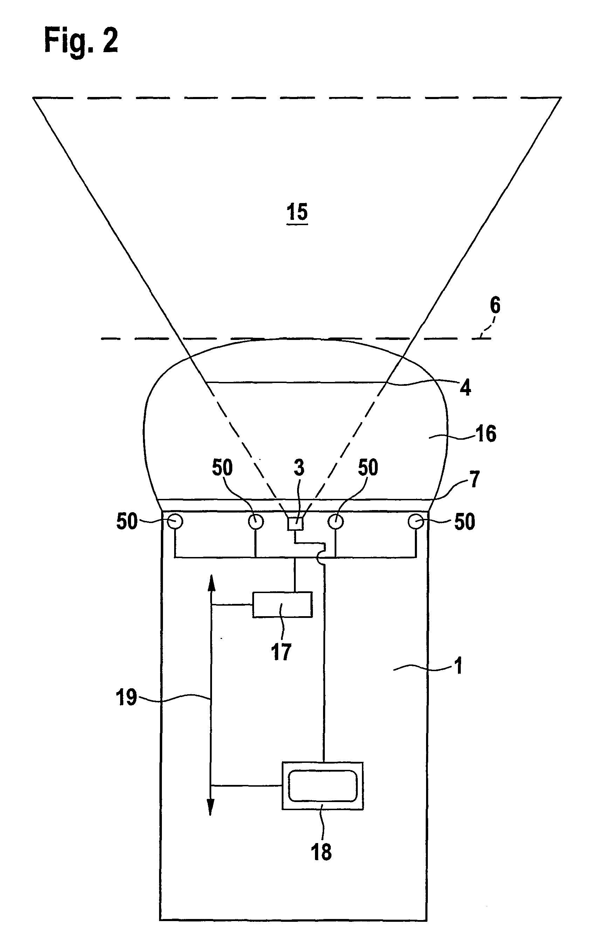

In der Figur 2 ist ein schematischer Aufbau einer erfindungsgemäßen Vorrichtung zur Umfeldüberwachung gezeigt. Es wird beispielhaft eine Überwachung des rückwärtigen Fahrraums erläutert. An dem Fahrzeugheck 57 ist die Kamera 3 angeordnet, die den rückwärtigen Fahrraum beobachtet und deren Blickfeld 15 kegelförmig von der Kamera 3 ausgehend ab dem Mindestabstand 4 den Fahrweg 2 bildlich erfassen kann, wobei der Sichtbereich der Kamera unterhalb des Mindestabstandes 4, in dem die Kamera den Fahrweg 2 noch nicht erreicht, gestrichelt in der Figur 2 dargestellt ist. Ferner sind an der Fahrzeugrückseite vier Sensoren 50 angeordnet, die von einem Steuergerät 17 angesteuert werden und die ihre Messergebnisse an das Steuergerät 17 zurück übermitteln. Die Sensoren 50 sind vorzugsweise als Ultraschallsensoren oder als Mikrowellensensoren ausgeführt und führen eine Abstandsmessung nach einem Echoprinzip durch. Der Abstand wird aus der Zeitverschiebung zwischen einem ausgesendeten und einem von einem Hindernis zurückgestrahlten und von den Sensoren 50 wieder empfangenen Signal bestimmt. In einer bevorzugten Ausführungsform wird dabei nicht nur das von einem der Sensoren ausgesendete Signal von dem Sensor selbst wieder empfangen, sondern es sind auch Kreuzmessungen möglich, so dass ein benachbarter Sensor das von seinem Nachbarsensor ausgestrahlte, reflektierte Signal empfängt. Damit überwachen die Sensoren 50 den fahrzeugnahen Bereich 16 zwischen dem Mindestabstand 7 und ihrer maximalen Reichweite 6. Die Kamera 3 ist mit einer Anzeigeeinheit 18 verbunden, die für den Fahrer des Fahrzeugs sichtbar ist. In der Anzeigeeinheit 18, die z.B. als eine Flüssigkristallzelle ausgeführt ist, wird das von der Kamera 3 erfasste Bild dargestellt. Das Steuergerät 17 gibt Daten erfasster Hindernisse über einen Datenbus 19 ebenfalls an die Anzeigeeinheit 18 weiter, wobei Warnhinweise in Bezug auf die von den Sensoren 50 neben dem Kamerabild in der Anzeigeeinheit 18 angezeigt oder in das Kamerabild eingeblendet werden. Der Datenbus kann z.B. als ein CAN-Bus (Controller Area Network) ausgeführt sein, wobei gegebenenfalls die Daten weiterer Sensoren im Fahrzeug mit ausgewertet werden. Über den Datenbus 19 werden die Daten von über die Sensoren 50 erfassten Objekte an die Anzeigeeinheit 18 übermittelt. Statt einer Verbindung über einen Datenbus kann auch eine herkömmliche Punkt-zu-Punkt-Datenverbindung verwendet werden. In einer weiteren, in der Figur 2 nicht dargestellten Ausführungsform ist es auch möglich, dass das Ausgangssignal der Kamera 3 und das Signal des Steuergeräts 17 zunächst auf eine Ansteuereinheit gegeben wird, die mit der Anzeigeeinheit 18 verbunden ist und in der zunächst die übermittelten Daten zur Anzeige in der Anzeigeeinheit 18 verarbeitet werden. Die Ansteuerung der Kamera 3 kann dann ebenfalls über dieses Steuergerät erfolgen. Andernfalls kann auch ein Steuergerät zur Ansteuerung der Kamera 3 in diese integriert sein. Die Kamera 3 wird vorzugsweise dann aktiviert, wenn der Rückwärtsgang des Fahrzeugs eingelegt oder eine Fahrstufe "rückwärts" gewählt wird.

In einer weiteren Ausführungsform kann die Anzeigeeinheit 18 auch derart ausgeführt sein, dass das von der Kamera 3 erfasste Bild, wobei die Kamera 3 eine Weitwinkeloptik aufweist, zunächst entzerrt wird, so dass eine durch die Weitwinkeloptik entstehende Verzerrung des Bildes durch eine geeignete Korrektur wieder ausgeglichen wird.

Hierdurch erscheint das Bild so, wie sich die Situation für einen Betrachter bei eigener Beobachtung darstellt, um die Orientierung zu erleichtern. In einer bevorzugten Ausführungsform kann auch keine Weitwinkeloptik oder nur eine Kamera mit schwacher Verzerrung, die keine Korrektur erfordert, zur Beobachtung des rückwärtigen Fahrraums verwendet werden. Ferner kann die Anzeigeeinheit 18 auch dazu ausgelegt sein, in Abhängigkeit von ebenfalls über den Datenbus 19 empfangenen Daten, so z.B. der Lenkwinkelstellung, in Abhängigkeit von dem aktuellen Lenkradeinschlag einen möglichen Fahrweg des Fahrzeugs in das Kamerabild einzublenden. Insbesondere muss der Stoßfänger des Fahrzeugs von der Kamera 3 nicht mit erfasst werden. Eine unmittelbare Umgebung des Stoßfängers wird stattdessen von den Sensoren 50 überwacht. Die Sensoren 50 überwachen in einer bevorzugten Ausführungsform einen Abstandsbereich bis etwa 2 m Entfernung vor dem Fahrzeug. Die Kamera überwacht den Fahrweg in einem Bereich von etwa 0,5 m Entfernung bis unendlich, d.h. bis zur maximalen Sichtweite.

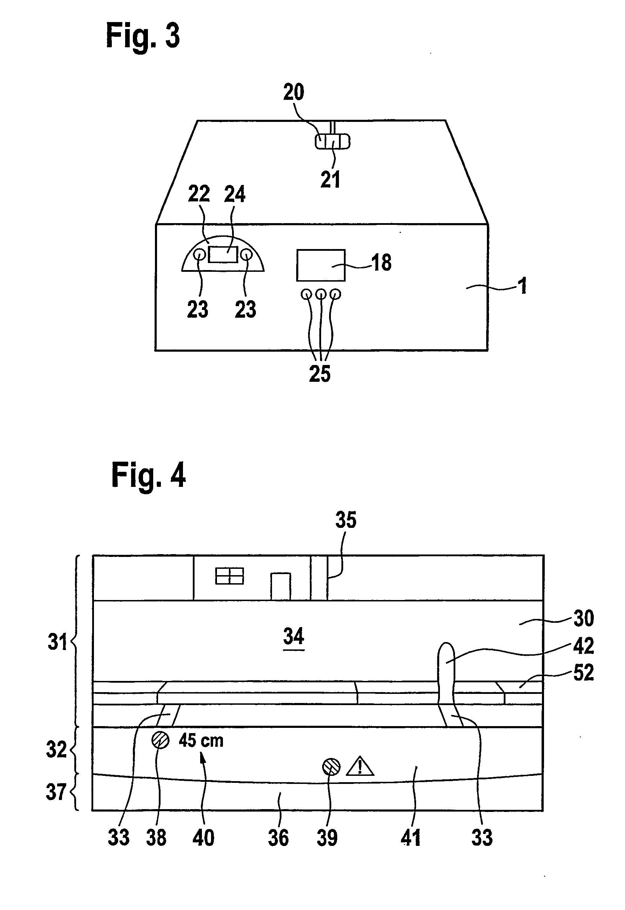

In der Figur 3 ist beispielhaft dargestellt, an welchen Stellen eine Anzeigevorrichtung zur Information des Fahrers in dem Fahrzeug montiert werden kann. In einer ersten Ausführungsform ist die Anzeigeeinheit 18 in einer Mittelkonsole des Kraftfahrzeugs 1 angeordnet. Bevorzugt dient die Anzeigeeinheit 18 zugleich auch anderen Fahrzeugsystemen, z.B. einem Radiosystem oder einer Navigationsvorrichtung. In einer weiteren Ausführungsform kann die Anzeigevorrichtung auch in einen Innenspiegel 20 des Kraftfahrzeugs z.B. als eine Flüssigkristallanzeige integriert sein. Anstelle des Spiegelbildes wird nunmehr das Kamerabild mit den zusätzlichen Hinweisen der Sensorik in eine Anzeigeeinheit 21 eingeblendet. Auch in einem Kombiinstrument 22 zur Anzeige einer Vielzahl von Fahrzeuggrößen, z.B. mittels Zeigeranzeigen 23, kann eine Anzeigeeinheit 24 zur Anzeige des Kamerabildes und der Hinweise der Sensorik vorgesehen sein. In einem in der Zeichnung nicht dargestellten Ausführungsbeispiel können auch ergänzend akustische Warnsignale über einen Lautsprecher, insbesondere über einen Radiolautsprecher, ausgegeben werden. Neben einer automatischen Aktivierung über das Einlegen des Rückwärtsgangs oder die Fahrstufe "rückwärts" kann die Vorrichtung zur Umfeldüberwachung auch über Bedienelemente 25 aktiviert werden. Die Bedienelemente 25 erlauben bevorzugt ebenfalls eine Helligkeit- und Kontrastregelung des Bildes, sowie eine mögliche Aktivierung einer Einblendung von Hilfslinien in das Kamerabild.

In der Figur 4 ist eine Anzeigendarstellung 30 der Anzeige der erfindungsgemäßen Umfelderfassungsvorrichtung dargestellt. In einem ersten Anzeigebereich 31 ist das von der Kameravorrichtung erfasste Bild angezeigt. In dem hier gewählten Ausführungsbeispiel sind ein Randstein 52, Markierungen 33 zur Parkplatzbegrenzung, eine Freifläche 34 und ein Haus 35 sichtbar. In einem zweiten Anzeigebereich 32 erfolgt keine Bilddarstellung des Kamerabildes, sondern es werden von den Sensoren 50 erfasste Objekte grafisch dargestellt. Der zweite Anzeigebereich 32 deckt den Bereich im Rückraum des Fahrzeugs ab, der zwischen dem Mindestabstand 4 für die Fahrwegüberwachung durch die Kamera 3, also der minimalen Kamerareichweite, und einem Stoßfänger 36 des Kraftfahrzeugs liegt und sich damit außerhalb des Kamerablickfeldes 15 befindet. In einer ersten Ausführungsform sind der erste und der zweite Anzeigebereich disjunkt, d.h. in dem ersten Anzeigebereich 31 werden keine Hinweise der Sensorvorrichtung eingeblendet. In einer weiteren Ausführungsform kann der zweite Anzeigebereich 32 mit dem ersten Anzeigebereich überlappen und in das Kamerabild hineinragen" so dass von der Sensorik gemessene Abstände oder Objektpositionen dem Kamerabild grafisch überlagert werden. Der Stoßfänger 36 des Kraftfahrzeugs ist in einem dritten Anzeigebereich 37 in der Anzeigendarstellung 30 dargestellt. Mittels der Sensoren 50 wird die Position von Hindernissen relativ zu dem Stoßfänger 36 des Fahrzeugs ermittelt, der im allgemeinen dasjenige Fahrzeugbauteil darstellt, das den äußeren Umfang des Fahrzeugs beschreibt. In dem hier gewählten Ausführungsbeispiel ist ein erstes Hindernis 38 und ein zweites Hindernis 39 von den Sensoren 50 erfasst worden. Das erste Hindernis 38 weist dabei einen größeren Abstand zu dem Stoßfänger 36 auf, als das zweite Hindernis 39. Daher unterscheidet sich in einer bevorzugten Ausführungsform die Farbdarstellung des ersten Hindernisses 38 von der Farbdarstellung des zweiten Hindernisses 39, wobei das erste Hindernis, gekennzeichnet in der Zeichnung durch die unterschiedliche Schraffierung, in gelb und das zweite Hindernis 39 in rot in den zweiten Anzeigebereich 32 eingetragen wird. In einer bevorzugten Ausführungsform wird zu dem ersten Hindernis 38 zudem der Abstand 40, der hier 45 cm beträgt, in den zweiten Anzeigebereich 32 mit eingeblendet. Bei dem zweiten Hindernis 39 wird ein Warnsymbol 41 in den zweiten Anzeigebereich benachbart zu dem zweiten Hindernis 39 eingeblendet. Die Hindernisse 38, 39 werden bevorzugt in der von der Sensorvorrichtung erfassten Form dargestellt. Bei dem gewählten Ausführungsbeispiel handelt es sich bei dem zweiten Hindernis 39 z.B. um eine stabförmige, klappbare Blockierung der durch die Markierungen 33 abgeteilten Parktasche, die ein unbefugtes Benutzen der Parktasche verhindern soll. Der Fahrer kann nun durch die Anzeige dieses Hindernisses in dem zweiten Anzeigebereich noch rechtzeitig reagieren und entweder einen anderen Parkplatz wählen oder das Hindernis beseitigen. Bei dem ersten Hindernis 38 kann es sich um einen einem Begrenzungspfahl 42 entsprechenden Abteilungspfahl zum Trennen einzelner Parktaschen handeln. Vergrößert der Fahrer nun den Abstand zu den Hindernissen 38, 39 wieder, so werden die Hindernisse in dem Kamerabild in dem ersten Anzeigebereich 31 wieder sichtbar, und der Fahrer kann sich davon überzeugen, ob er gegebenenfalls nicht doch weiter zurückstoßen kann, falls sich das Hindernis z.B. als eine Papertüte oder als eine leere Dose herausstellt, die den Fahrraum für das Kraftfahrzeug nicht blockiert.

Bei dem hier gewählten Ausführungsbeispiel werden Hinweise auf Hindernisse lediglich in dem zweiten Anzeigebereich 32 angezeigt. Jedoch ist es auch möglich, besondere Hindernisse, z.B. sich im Fahrweg befindliche Hindernisse, die von der Sensorik bereits erfasst werden, wenn sie noch im Kamerabild sichtbar sind, auch im Kamerabild gesondert hervorzuheben bzw. entsprechende akustische Hinweise auszugeben. In dem vorliegenden Fall könnte z.B. der Randstein 52, insbesondere bei einer für das Fahrzeug gefährlichen Höhe, durch einen Rahmen in einer Warnfarbe eingerahmt und damit hervorgehoben werden. Neben einer reinen Abstandsmessung mittels der Sensoren 50 kann zudem durch das Steuergerät 17 auch die Geschwindigkeit von sich auf das Fahrzeug zubewegenden Hindernissen und/oder die Eigengeschwindigkeit des Kraftfahrzeugs selbst für die Warnung berücksichtigt werden, wobei insbesondere bei einer hohen, ermittelten Kollisionsgeschwindigkeit frühzeitig eine insbesondere akustische Warnung ausgegeben wird.

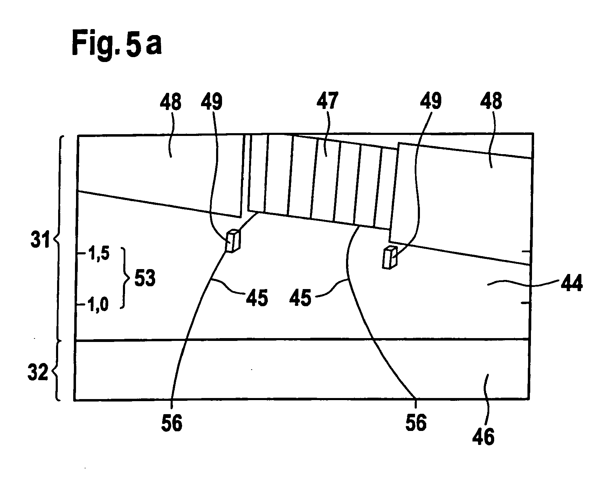

In der Figur 5a ist ein Beispiel für eine Anzeigendarstellung 44 mit der Eintragung von Hilfslinien 45 dargestellt, die in Abhängigkeit von der Lenkwinkelstellung Begrenzungen des von dem Fahrzeug erwarteten Fahrwegs in dem Kamerabild in dem ersten Anzeigebereich 31 kennzeichnen. Bei dem hier gewählten Beispiel ist neben dem ersten Anzeigebereich 31 lediglich noch der zweite Anzeigebereich 32 vorgesehen, wobei der Stoßfänger 36 zumindest teilweise, wie durch Markierungen 56 angedeutet, mit einem unteren Rand 46 der Anzeigendarstellung 44 gleichgesetzt wird. Eine gesonderte Einblendung des Stoßfängers. 36 erfolgt in dem hier gezeigten Beispiel nicht. In den hier gewählten Beispiel werden die Hilfslinien in den zweiten Anzeigebereich 32 fortgesetzt. Der von den Hilfslinien 45 bezeichnete Fahrweg des Fahrzeugs führt auf ein Tor 47 zu, das in eine Mauer 48 eingelassen ist. Vor dem Tor 47 sind auf dem Boden Kontrollelemente 49 beidseitig des Fahrwegs vorgesehen, die z.B. mittels einer Lichtschranke die Annäherung eines Fahrzeugs an das Tor 47 erfassen. Bei der Zufahrt auf das Tor sollen die Kontrollelemente 49 nicht berührt werden, da hierdurch sowohl das Fahrzeug als auch die Kontrollelemente 49 beschädigt werden könnten. Die Hilfslinien 45, die den Fahrweg anzeigen, werden nicht nur in das Kamerabild in dem ersten Anzeigebereich 31, sondern auch in dem zweiten Anzeigebereich 32 fortgeführt eingeblendet. In der Figur 5a sind ferner Abstandshinweise 53 in das Kamerabild in dem ersten Anzeigebereich 31 eingetragen, die dem Fahrer eine grobe Orientierung darüber geben, in welchem Abstand zu dem Fahrzeug sich Hindernisse befinden. Bei dem hier gewählten Beispiel ist das der Abstand 1m und 1,5 m. Der eingeblendete Abstand ist dabei von dem Mindestabstand des von der Kameravorrichtung erfassbaren Fahrwegbereiches abhängig. Dieser Mindestabstand liegt je nach Anwendung z.B. in einem Bereich zwischen 30 cm und 5 m, vorzugsweise bei Kraftfahrzeugen bei 0,5 m.

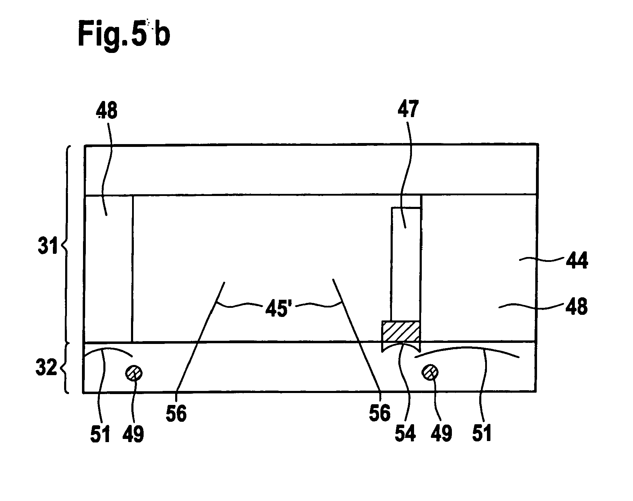

In der Figur 5b ist die Anzeigendarstellung 44 zu einem späteren Zeitpunkt dargestellt, wobei sich das Fahrzeug an die Toröffnung bereits angenähert hat. Das Tor 47 ist geöffnet, so dass eine Fahrt zwischen den Mauern 48 nunmehr möglich ist. Im Gegensatz zu der nach rechts eingeschlagenen Lenkradstellung in der Figur 6a ist die Lenkung des Fahrzeugs in der Figur 6b nunmehr gerade eingestellt, wie es aus den gerade verlaufenden Hilfslinien 45' in der Figur 6b deutlich wird. Die Kontrollelemente 49 sind entsprechend ihrem Abstand zu dem Fahrzeug in dem zweiten Anzeigebereich 32 dargestellt. Aus der Darstellung der Hilfslinien 45' ist es für den Benutzer des Fahrzeugs nunmehr entnehmbar, dass er gefahrlos zwischen den Kontrollelementen 49 durch das geöffnete Tor hindurch steuern kann, da kein Hinweis auf Hindernisse zwischen den Hilfslinien 45' angezeigt wird oder in dem ersten Anzeigebereich 31 in dem Kamerabild erkennbar ist. Ferner sind Hinweissymbole 51 dargestellt, die in einem größeren Abstand zu dem Fahrzeug den nicht sichtbaren Bodenbereich der Mauer 48 beidseitig des Fahrweges anzeigen. Bei dem hier eingestellten Fahrweg ist die Weiterfahrt problemlos möglich. Wäre der Fahrweg nun nach rechts oder nach links versetzt, so dass entweder die Mauer 48 oder die Kontrollelemente innerhalb der Hilfslinien 45' lägen, müsste der Fahrer durch Vorziehen und erneutes Heranfahren an die Toröffnung einen neuen Versuch zur Durchfahrt durch das Tor unternehmen. Sollte sich eines der Hindernisse 48, 49 zu sehr dem Fahrzeug nähern, wird vorzugsweise ein akustischer Hinweis an den Fahrer ausgegeben. Ferner ist ein Hinweisfeld 54 in die Anzeigendarstellung an dem Tor 47 eingetragen. Das Tor 47 liegt in einer Grenzentfernung der Sensoren 50. Ein Hinweis auf das Tor wird daher in beiden Anzeigebereichen 31, 32 in die Anzeigendarstellung eingetragen, sodass das Hinweisfeld von dem zweiten Anzeigebereich 32 in den ersten Anzeigebereich 31 überlappt und damit in das Kamerabild hineinragt.

## Patentansprüche

1. Vorrichtung zur Umfeldüberwachung eines Fahrzeugs mit einer Kamera (3) zur Erfassung der Fahrzeugumgebung, mit einer Sensorvorrichtung (5, 50) zur Erfassung von Hindernissen außerhalb des Kamerablickfeldes (15) und mit einer Anzeigeeinheit (18, 21, 24) zur Darstellung des Kamerabildes derart, dass mindestens ein Hinweis (38, 38', 39, 39, 49, 51) auf ein außerhalb des Kamerablickfeldes (15) liegendes, von der Sensorvorrichtung (5, 50) erfasstes Hindernis in der Anzeigeeinheit (18, 21, 24) dargestellt wird, **dadurch gekennzeichnet, dass** in einem ersten Anzeigebereich (31) der Anzeigeeinheit (18, 21, 24) das Kamerabild und in einem zu dem ersten Anzeigebereich benachbarten zweiten Anzeigebereich (32) der Anzeigeeinheit Hinweise (38, 38', 39, 39, 49, 51) auf von der Sensorvorrichtung (5, 50) erfasste Hindernisse außerhalb des Kamerablickfeldes (15) in der Weise angezeigt sind, dass die von der Sensorvorrichtung (5, 50) erfassten, außerhalb des Kamerablickfeldes liegenden Hindernisse möglichst maßstabsgerecht dargestellt werden, und dass in einem dritten Anzeigebereich (37) der Stoßfänger (36) des Kraftfahrzeugs dargestellt wird, wobei sich der Stoßfänger außerhalb des Kamerablickfeldes (15) befindet.

2. Vorrichtung zur Umfeldüberwachung nach Anspruch 1, **dadurch gekennzeichnet, dass** ein außerhalb des Kamerablickfeldes (15) liegendes Hindernis in Abhängigkeit von dem Abstand des Hindernisses zu dem Fahrzeug (1) dargestellt ist.

3. Vorrichtung zur Umfeldüberwachung nach einem der vorhergehenden Ansprüche, **dadurch gekennzeichnet, dass** der Abstand (40) eines außerhalb des Kamerablickfeldes (15) liegenden Hindernisses zu dem Fahrzeug (1) in der Anzeigeeinheit (18, 21, 24) angezeigt ist.

4. Vorrichtung zur Umfeldüberwachung nach einem der vorhergehenden Ansprüche, **dadurch gekennzeichnet, dass** die Reichweite der Kamera (3) zur Erfassung eines Hindernisses größer ist als die Reichweite (6, 13) der Sensorvorrichtung (5, 50).

5. Vorrichtung zur Umfeldüberwachung nach einem der vorhergehenden Ansprüche, **dadurch gekennzeichnet, dass** die Sensorvorrichtung (5, 50) mindestens einen Ultraschallsensor und/oder einen Mikrowellensensor aufweist.

6. Vorrichtung zur Umfeldüberwachung nach einem der vorhergehenden Ansprüche, **dadurch gekennzeichnet, dass** in der Anzeigeeinheit (18, 21, 24) Hilfslinien (45, 45', 53) zur Anzeige eines Fahrweges oder zur Darstellung von Abstandsmarkierungen eingeblendet sind.

7. Vorrichtung zur Umfeldüberwachung nach einem der vorhergehenden Ansprüche, **dadurch gekennzeichnet, dass** die Kamera (3) eine Weitwinkelkamera ist.

## Claims

1. Apparatus for monitoring the surrounding area of a vehicle, comprising a camera (3) for recording the vehicle surroundings, comprising a sensor apparatus (5, 50) for detecting obstacles outside the field of view (15) of the camera, and comprising a display unit (18, 21, 24) for showing the camera image in such a way that at least one indicator (38, 38', 39, 39, 49, 51) for an obstacle which is situated outside the field of view (15) of the camera and is detected by the sensor apparatus (5, 50) is shown on the display unit (18, 21, 24), **characterized in that** the camera image is displayed in a first display region (31) of the display unit (18, 21, 24) and indicators (38, 38', 39, 39, 49, 51) for obstacles which are outside the field of view (15) of the camera and are detected by the sensor apparatus (5, 50) are displayed in a second display region (32), which is adjacent to the first display region, of the display unit in such a way that the obstacles which are detected by the sensor apparatus (5, 50) and are situated outside the field of view of the camera are shown as true-to-scale as possible, and **in that** the bumper (36) of the motor vehicle is shown in a third display region (37), with the bumper being located outside the field of view (15) of the camera.

2. Apparatus for monitoring the surrounding area, according to Claim 1, **characterized in that** an obstacle which is situated outside the field of view (15) of the camera is shown as a function of the distance of the obstacle from the vehicle (1).

3. Apparatus for monitoring the surrounding area according to either of the preceding claims, **characterized in that** the distance (40) of an obstacle which is situated outside the field of view (15) of the camera from the vehicle (1) is displayed on the display unit (18, 21, 24).

4. Apparatus for monitoring the surrounding area according to one of the preceding claims, **characterized in that** the range of the camera (3) for recording an obstacle is greater than the range (6, 13) of the sensor apparatus (5, 50).

5. Apparatus for monitoring the surrounding area according to one of the preceding claims, **characterized in that** the sensor apparatus (5, 50) has at least one ultrasound sensor and/or a microwave sensor.

6. Apparatus for monitoring the surrounding area according to one of the preceding claims, **characterized in that** guiding lines (45, 45', 53) for displaying a roadway or for showing distance markers are shown on the display unit (18, 21, 24).

7. Apparatus for monitoring the surrounding area according to one of the preceding claims, **characterized in that** the camera (3) is a wide-angle camera.

## Revendications

1. Dispositif de surveillance de l'environnement d'un véhicule, comportant une caméra (3) pour saisir l'environnement du véhicule, un dispositif capteur (5, 50) pour détecter des obstacles en dehors du champs de vision de la caméra (15) et une unité d'affichage (18, 21, 24) pour représenter l'image de la caméra, de sorte que dans cette unité au moins un signe (38, 38', 39, 39, 49, 51) représente un obstacle saisi par le dispositif capteur (5, 50) en dehors du champs de vision (15) de la caméra,
**caractérisé en ce qu'**
dans une première zone d'affichage (31) de l'unité d'affichage (18, 21, 24) montre l'image de la caméra et dans une seconde zone d'affichage (32) proche de la première zone d'affichage montre des signes (38, 38", 39, 39, 49, 51) concernant des obstacles saisis par le dispositif capteur (5, 50) en dehors du champ de vision de la caméra (15), de sorte que les obstacles saisis par le dispositif capteur (5, 50) en dehors du champ de vision de la caméra, sont figurés le plus possible à l'échelle, et une troisième zone d'affichage (37) représente le pare-choc (36) du véhicule qui se trouve en dehors du champ de vision de la caméra (15).

2. Dispositif de surveillance selon la revendication 1,
**caractérisé en ce qu'**
un obstacle qui se trouve en dehors du champ de vision de la caméra (15) est représenté en fonction de sa distance au véhicule (1).

3. Dispositif de surveillance selon la revendication 1 ou 2,
**caractérisé en ce que**
la distance (40) séparant du véhicule (1) d'un obstacle se trouvant en dehors du champ de vision de la caméra (15), est indiquée dans l'unité d'affichage (18, 21, 24).

4. Dispositif de surveillance selon une des revendications précédentes,
**caractérisé en ce que**
le rayon d'action de la caméra (3), pour saisir un obstacle, est supérieur au rayon d'action (6, 13) du dispositif capteur (5, 50).

5. Dispositif de surveillance selon une des revendications précédentes,
**caractérisé en ce que**
le dispositif capteur (5, 50) comprend au moins un capteur à ultrasons et/ ou un capteur à micro-ondes.

6. Dispositif de surveillance selon une des revendications précédentes,
**caractérisé en ce que**
dans le dispositif d'affichage (18, 21, 24), apparaissent des lignes auxiliaires (45, 45', 53) pour indiquer un parcours ou pour figurer des repères d'espacement.

7. Dispositif de surveillance selon une des revendications précédentes,
**caractérisé en ce que**
la caméra (3) est une caméra grand angle.
